(19) Europäisches Patentamt / European Patent Office / Office européen des brevets

(11) **EP 2 765 211 B1**

(12) **EUROPEAN PATENT SPECIFICATION**

(45) Date of publication and mention
of the grant of the patent:
**01.07.2020 Bulletin 2020/27**

(21) Application number: **12847962.3**

(22) Date of filing: **06.11.2012**

(51) Int Cl.:
*B21B 1/26* (2006.01)     *C21D 8/02* (2006.01)
*C21D 8/04* (2006.01)     *C22C 18/04* (2006.01)
*C22C 38/00* (2006.01)     *C22C 38/14* (2006.01)
*C22C 38/60* (2006.01)     *C23C 2/02* (2006.01)
*B32B 15/01* (2006.01)     *C22C 38/02* (2006.01)
*C22C 38/04* (2006.01)     *C22C 38/06* (2006.01)
*C22C 38/08* (2006.01)     *C22C 38/10* (2006.01)
*C22C 38/12* (2006.01)     *C22C 38/16* (2006.01)
*C22C 38/24* (2006.01)     *C22C 38/26* (2006.01)
*C22C 38/28* (2006.01)     *C21D 9/46* (2006.01)

(86) International application number:
**PCT/JP2012/007089**

(87) International publication number:
**WO 2013/069252 (16.05.2013 Gazette 2013/20)**

(54) **HIGH-TENSILE-STRENGTH HOT-ROLLED STEEL SHEET AND METHOD FOR PRODUCING SAME**

HEISSGEWALZTES STAHLBLECH MIT HOHER BRUCHFESTIGKEIT UND VERFAHREN ZU SEINER HERSTELLUNG

TÔLE EN ACIER LAMINÉE À CHAUD DE FORCE DE TRACTION ÉLEVÉE, ET PROCÉDÉ DE FABRICATION DE CELLE-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.11.2011 JP 2011244346**

(43) Date of publication of application:
**13.08.2014 Bulletin 2014/33**

(73) Proprietor: **JFE Steel Corporation**
**Tokyo, 100-0011 (JP)**

(72) Inventors:
• **ARIGA, Tamako**
**Tokyo 100-0011 (JP)**
• **FUNAKAWA, Yoshimasa**
**Tokyo 100-0011 (JP)**
• **MORIYASU, Noriaki**
**Tokyo 100-0011 (JP)**

(74) Representative: **Hoffmann Eitle**
**Patent- und Rechtsanwälte PartmbB**
**Arabellastraße 30**
**81925 München (DE)**

(56) References cited:
EP-A1- 2 177 640     EP-B1- 1 444 374
WO-A1-2010/131303     WO-A1-2011/126154
JP-A- 2005 002 406     JP-A- 2005 120 430
JP-A- 2009 052 139     US-A- 3 947 293
US-B1- 6 544 354

**Description**

[TECHNICAL FIELD]

The present invention relates to a high strength hot rolled steel sheet that is suitable for raw material of transportation equipment such as a component for automobile or a structural material or a similar material, features excellent formability, in particular, excellent stretch-flange formability, material stability, and material uniformity, and has a tensile strength (TS) of 780 MPa or more. The present invention also relates to a method for producing the high strength hot rolled steel sheet.

[BACKGROUND ART]

From the aspect of global environment conservation, in order to reduce $CO_2$ emission amount, achieving weight reduction of the automobile body while maintaining its strength so as to improve fuel consumption of the automobile has been extremely important problem in the automobile industry. In order to achieve weight reduction of the automobile body while maintaining the strength of the automobile body, it is effective to increase the strength of a steel sheet to be a raw material for automobile components so as to provide a thinned steel sheet. Therefore, recently, high tensile strength steel sheets have been actively used for automobile components. In the automobile industry, for example, as raw materials for underbody components, application of steel sheets with tensile strength (TS) of 780 MPa level or more has been considered.

On the other hand, most of the automobile components using a steel sheet as raw material are shaped by press processing, burring processing, or similar processing. Therefore, it is required to stably achieve the steel sheet for automobile components having excellent formability (stretch-flange formability) . Press forming a steel sheet of partially different strength changes an amount of springback in proportion to the strength, resulting in kink of components. Accordingly, to obtain components with desired strength and accuracy of dimensions and form, it is extremely important that strength and formability of a steel sheet employed as a raw material be uniformed in the width direction of the steel sheet.

Regarding a technique to achieve high strengthening of steel sheet while ensuring excellent formability, for example, Patent Literature 1 proposes a technique providing a high strength hot-rolled steel sheet that contains, by mass%, C: 0.08 to 0.20%, Si: 0.001% or more to less than 0.2%, Mn: more than 1.0% to 3.0% or less, Al: 0.001 to 0.5%, V: more than 0.1% to 0.5% or less, Ti: 0.05% or more to less than 0.2%, and Nb: 0.005 to 0.5%, and meets the following three expressions: (Expression 1) $(Ti/48 + Nb/93) \times C/12 \leq 4.5 \times 10^{-5}$, (Expression 2) $0.5 \leq (V/51 + Ti/48 + Nb/93)/(C/12) \leq 1.5$, and (Expression 3) $V + Ti \times 2 + Nb \times 1.4 + C \times 2 + Mn \times 0.1 \geq 0.80$. Balance is Fe and inevitable impurities. The high strength hot-rolled steel sheet has a steel sheet structure where ferrite with an average grain size of 5 $\mu$m or less and hardness of 250 Hv or more is contained 70 volume % or more. The high strength hot-rolled steel sheet has a strength of 880 MPa or more and a yield ratio of 0.80 or more.

Patent Literature 2 proposes a technique providing a high strength steel sheet that has a chemical composition that contains, by mass%, C: 0.02% or more to 0.20% or less, Si: 0.3% or less, Mn: 0.5% or more to 2.5% or less, P: 0.06% or less, S: 0.01% or less, Al: 0.1% or less, Ti: 0.05% or more to 0.25% or less, V: 0.05% or more to 0.25% or less. Balance is Fe and inevitable impurities. The high strength steel sheet has a substantial ferrite single-phase structure and contains precipitates having a size of less than 20 nm. The precipitates contains 200 mass ppm or more to 1750 mass ppm or less Ti and 150 mass ppm or more to 1750 mass ppm or less V. Solid solution V is 200 mass ppm or more to less than 1750 mass ppm. This technique provides a high strength steel sheet having excellent stretch-flange characteristics after processing and corrosion resistance after painting.

In the technique described in Patent Literature 2, a precipitate in a steel sheet is fine-grained (size of less than 20 nm) to enhance strength of the steel sheet. In the technique described in Patent Literature 2, as a precipitate that allows maintaining the precipitate contained in steel sheet to be fine, precipitate containing Ti and V is employed. Additionally, by designing an amount of solid solution V contained in the steel sheet to a desired range, stretch-flange characteristics after processing is improved. According to the technique described in Patent Literature 2, this obtains a high strength hot rolled steel sheet that is excellent in stretch-flange formability after processing and corrosion resistance after painting and has a tensile strength of 780 MPa or more.

Patent Literature 3 describes a high strength steel sheet excellent in warm stamp formability and a method for manufacturing the same. The steel sheet has a composition containing, in terms of % by mass, C: 0.01 to 0.2 %, Si: 0.5 % or lower, Mn: 2 % or lower, P: 0.03 % or lower, S: 0.01 % or lower, Al: 0.07 % or lower, and N: 0.01 % or lower and further containing one or two or more elements selected from Ti, Nb, V, Mo, W and B. Further, the steel sheet has a tensile strength of 590 MPa or more and tensile properties in which the strain from the indication of the maximum load to fracture is larger than the strain before the indication of the maximum load from the start of tensile test obtained in a tensile test carried out at a test temperature of 400°C or higher and the strain before the indication of the maximum load from the start of tensile test is 40 % or more in terms of ratio to the total elongation from the start of tensile test to fracture obtained in a tensile test carried out at a test temperature of lower than 400°C. The matrix of the steel sheet is substantially a ferrite single phase in which the area ratio of the ferrite phase is 95 % or more; and a structure in which alloy carbides having a size of lower than 10 nm are dispersed and deposited in the matrix in a state having no variant selection.

Patent literature 4 describes a high strength steel sheet having high stretch flangeability after working and corrosion resistance after painting. The steel sheet contains, on the basis of mass percent, C: 0.02 to 0.20 %, Si: 0.3 % or less, Mn: 0.5 to 2.5 %, P: 0.06 % or less, S: 0,01 % or less, Al: 0.1 % or less, Ti: 0.05 to 0.25 %, and V: 0.05 to 0.25 %, the remainder being Fe and incidental impurities. The steel sheet has a substantially ferritic single phase, the ferritic single phase containing precipitates having a size of less than 20 nm, the precipitates containing 200 to 1750 mass ppm Ti and 150 to 1750 mass ppm V, V dissolved in solid solution being 200 or more but less than 1750 mass ppm.

Patent Literature 5 describes a precipitation-strengthened high-strength steel sheet, a method for designing the same and a method for manufacturing the same. In the designing method, one or two or more kinds of a first metal element M1 to generate MC-type carbide with an electronegativity of < 1.8 and one or two or more kinds of a second metal element M2 with an electronegativity of ≥ 1.8 are selected as the metal elements to constitute carbide in a combination that the atomic radius difference between the first metal element M1 and the second metal element M2 is < 10 %, and the quantity of addition of the first metal element M1, the second metal element M2 and C is determined so as to generate the carbide containing the first metal element M1 and the second metal element M2.

Patent Literature 6 describes a hot rolled steel sheet comprising, by mass%, 0.025 to 0.15 % of C, 0.01 to 1.0 % or less of Si, 1.0 to 2.5 % of Mn, 0.02 % or less of P, 0.005 % or less of S, 0.5 % or less of Al, 0.04 to 0.10 % of Ti, and 0.007 % or less of N, as well as Fe and inevitable impurities as the balance, wherein the Mn/Ti ratio is 15 or greater; Nb is not added; the ferrite volume percentage is 30 % or greater and the balance comprises one or both of pearlite and bainite; the average aspect ratio of the crystal grain corresponding ellipsoid is 5 or less; the average distribution density on the ferrite grain boundary surface of Ti carbide having a grain size of 20 nm or greater is 10 grains/μm or less; the brittle fracture rate of surface fractured by punching is less than 20 %; and the maximum tensile strength is 590 MPa or greater.

[CITATION LIST]

[PATENT LITERATURE]

[Patent Literature 1] Japanese Unexamined Patent Application Publication No. 2006-161112
[Patent Literature 2] Japanese Unexamined Patent Application Publication No. 2009-052139
[Patent Literature 3] EP 2 557 193 A1
[Patent Literature 4] EP 2 177 640 A1
[Patent Literature 5] JP 2005-120430 A
[Patent Literature 6] WO 2010/131303 A1

[SUMMARY OF INVENTION]

[TECHNICAL PROBLEM]

However, in the technique proposed in Patent Literature 1, stretch-flange formability is not considered. Accordingly, with the technique proposed in Patent Literature 1, to ensure a tensile strength of 780 MPa or more, a steel sheet structure is required to be a complex structure of a ferrite phase and a hard phase. However, performing burring processing on a steel sheet with such complex structure, a crack is initiated at an interface between the ferrite phase and the hard phase. That is, with the technique proposed in Patent Literature 1, to ensure a tensile strength of 780 MPa or more, there is a problem that sufficient stretch-flange formability cannot be always obtained. Additionally, controlling the second phase (the hard phase) is difficult. Accordingly, it is extremely difficult to produce a uniform material.

Meanwhile, according to the technique proposed in Patent Literature 2, specifying a precipitate of less than 20 nm ensures manufacturing hot-rolled steel sheets featuring excellent formability (elongation and stretch-flange formability) and strength up to about 780 MPa level. However, in strengthening of a steel sheet with precipitate, precipitate with finer particle size, which is less than 10 nm, is the main part of the strengthening mechanism. Accordingly, as the technique proposed in Patent Literature 2, specification of precipitate of less than 20 nm alone cannot obtain sufficient precipitation strengthening. Coexisting precipitates of 20 nm to several nm makes an amount of strengthening with precipitate instable. There is a problem that strength in a steel sheet width direction does not become uniform.

As described above, with the conventional techniques, obtaining high tensile strength steel sheets with stable strength and excellent stretch-flange formability is extremely difficult.

The present invention advantageously solves the problems with the conventional techniques described above, and an object of the present invention is to provide a high strength hot rolled steel sheet and a method for manufacturing the high strength hot rolled steel sheet suitable for transportation equipment and structural materials, in particular automobile components, and has a tensile strength of 780 MPa or more, excellent formability (in particular, stretch-flange formability), and excellent uniformity in strength and formability.

[SOLUTION TO PROBLEM]

Long and intensive research was carried out by the inventors of the present invention on various factors affecting high strengthening and formability such as stretch-flange formability of a hot-rolled steel sheet and material stability in a width direction of the hot-rolled steel sheet in order to solve the above problems. As a result, the following findings were obtained.

1) Designing the steel sheet structure to have a ferrite single-phase structure with low dislocation density and excellent formability and further precipitation strengthening by dispersed precipitation of the fine carbide improve the strength of the hot-rolled steel sheet and obtain excellent stretch-flange formability.

2) To obtain a hot-rolled steel sheet with excellent formability and a high strength of a tensile strength of 780 MPa or more, it is necessary to dispersedly precipitate fine carbide where the average particle size effective for precipitation strengthening is less than 10 nm at a desired volume fraction.

3) As the fine carbide that contributes to precipitation strengthening, carbide containing Ti and V is effective from the aspect of achieving strength or similar purpose.

4) To make uniform the formability of hot-rolled steel sheet in the width direction, contents of Ti and V, which form fine carbide, are specified. This is effective for reducing a structural change at an end of the steel sheet in the width direction.

5) To substantially design a matrix in a steel sheet structure as a ferrite single-phase and to dispersedly precipitate carbide containing Ti and V of less than 10 nm as described above at a desired volume fraction, it is important to control a coiling temperature during manufacturing the hot-rolled steel sheet to be a predetermined temperature.

The present invention was completed based on the above-described findings, and the following is the gist of the present invention.

[1] A high strength hot-rolled steel sheet has a chemical composition and a structure (microstructure). The composition comprises: C: 0.03% or more to less than 0.07%; Si: 0.3% or less; Mn: 1.0% or more to 1.8% or less; P: 0.025% or less; S: 0.005% or less; N: 0.0060% or less; Al: 0.001% or more to 0.1% or less; Ti: 0.07% or more to 0.11% or less; and V: 0.08% or more to less than 0.15% on a mass percent basis, such that Ti and V contents satisfy the following formula (1), optionally at least one selected from the group consisting of Nb and Mo by 1% or less in total, and optionally at least one selected from the group consisting of Cu, Sn, Ni, Ca, Mg, Co, As, Cr, W, B, Pb, Ta, and Sb by 1% or less in total on a mass percent basis, wherein balance is Fe and inevitable impurities. The matrix has a ferrite phase with an area ratio of 95% or more with respect to an overall structure. In the structure, fine carbide is dispersedly precipitated in the matrix, the fine carbide contains Ti and V has an average particle size of less than 10 nm, and a volume fraction of the fine carbide is 0.0020 or more with respect to an overall structure. The high strength hot-rolled steel sheet has a tensile strength of 780 MPa or more and a hole expansion ratio of 60% or more, a difference in a tensile strength between a center position of a sheet width and a position at one-quarter width of the steel sheet is 15 MPa or less, and a difference in a hole expansion ratio among the positions is 15% or less:

$$0.18 \leq Ti + V \leq 0.24 \ \dots \ (1)$$

(where Ti and V are respective contents of the elements (by mass%))

[2] In the high strength hot-rolled steel sheet according to [1], the chemical composition contains at least one selected from the group consisting of Nb and Mo by 1% or less in total on a mass percent basis.

[3] In the high strength hot-rolled steel sheet according to [1] or [2], the chemical composition further contains at least one selected from the group consisting of Cu, Sn, Ni, Ca, Mg, Co, As, Cr, W, B, Pb, Ta, and Sb by 1% or less in total on a mass percent basis.

[4] The high strength hot-rolled steel sheet according to any one of [1] to [3] further includes a plating layer is formed at a surface of the high strength hot rolled steel sheet.

[5] The method for producing a high strength hot-rolled steel sheet of any one of [1] to [3] includes: preparing, hot-rolling, cooling, and coiling. The preparing prepares a steel material with a chemical composition according to any one of [1] to [3]. The hot-rolling hot-rolls the steel material including rough rolling and finish rolling at a rolling temperature of 880°C or more to form a hot-rolled steel sheet. The cooling cools the hot-rolled steel sheet at an average cooling rate of 10°C/sec. or more subsequent to completion of the finish rolling. The coiling coils the hot-rolled steel sheet at 600°C or more to less than 700°C. The high strength hot-rolled steel sheet has a tensile strength of 780 MPa or more.

[6] The method according to [5] further includes plating a surface of the hot-rolled steel sheet subsequent to the coiling.

[ADVANTAGEOUS EFFECTS OF INVENTION]

The present invention provides a high strength hot rolled steel sheet with excellent formability, a strength of tensile strength of 780 MPa or more, and excellent material stability. The high strength hot rolled steel sheet suitable for a raw material for automobile components with a complicated cross-sectional shape when pressing can be stably produced industrially and provides an industrially useful effect.

[DESCRIPTION OF EMBODIMENTS]

Hereinafter, the present invention will be described in detail.

Firstly, reasons for limiting the structure of the steel sheet of the present invention will be described.

The present invention provides a hot-rolled steel sheet that has the following structure. The hot-rolled steel sheet has a matrix with an area ratio of a ferrite phase of 95% or more with respect to an overall structure. Fine carbide with average particle size of less than 10 nm containing Ti and V is dispersedly precipitated in the matrix. A volume fraction of the fine carbide with respect to the overall structure is 0.0020 or more. The hot-rolled steel sheet may have a plating layer on the surface of the hot-rolled steel sheet.

Ferrite phase: the area ratio of 95% or more with respect to the overall structure In the present invention, to maintain formability (stretch-flange formability) of the hot-rolled steel sheet, a ferrite phase is necessary to be formed. For improving the formability of the hot-rolled steel sheet, it is effective to achieve a ferrite phase with a low dislocation density and excellent ductility as the structure of the hot-rolled steel sheet. In particular, it is preferred to have a ferrite single-phase as the structure of the hot-rolled steel sheet for improving the stretch-flange formability. However, even in the case where the structure of hot-rolled steel sheet is not a complete ferrite single-phase, it is only necessary to have a substantially ferrite single-phase structure, that is, to have a ferrite phase with an area ratio of 95% or more with respect to the overall structure in order to sufficiently provide the above-described effects. Accordingly, the area ratio of the ferrite phase with respect to the overall structure is preferably to be 95% or more.

In the hot-rolled steel sheet of the present invention, the structure other than the ferrite phase employs cementite, pearlite, a bainite phase, a martensite phase, a retained austenite phase, and a similar phase. The acceptable sum of these phases is area ratio of 5% or less with respect to the overall structure.

Fine carbide containing Ti and V

The carbide containing Ti and V is more likely to be fine carbide with an extremely small average particle size. Therefore, in the present invention that increases the strength of the hot-rolled steel sheet by dispersedly precipitating the fine carbide in the hot-rolled steel sheet, the fine carbide to be dispersedly precipitated is preferred to be fine carbide containing Ti and V.

Conventionally, for high strengthening of the steel sheet, use of Ti carbide not containing V is a mainstream. In contrast, the present invention features use of carbide containing V in addition to Ti.

Ti easily forms carbide. Therefore, Ti carbide without V is likely to be coarse and less contributes to high strengthening of the steel sheet. Accordingly, to provide a desired strength (tensile strength: 780 MPa or more) to the steel sheet, adding more Ti and forming Ti carbide are necessary. On the other hand, excessive addition of Ti may cause reduction of formability (stretch-flange formability). This fails to obtain excellent formability applicable to a raw material for underbody components with a complicated cross-sectional shape, or a similar component.

On the other hand, tendency that V forms carbide is lower than that of Ti. Accordingly, the use of V is effective to reduce coarsening of carbide. Therefore, the present invention employs compound carbide that contains both Ti and V as carbide to be dispersedly precipitated. In the present invention, fine carbide containing Ti and V does not mean carbide where each individual carbide (i.e. Ti carbide or V carbide) is separately contained in a structure, but compound carbide containing both Ti and V in one fine carbide.

Average particle size of fine carbide containing Ti and V: less than 10 nm

The average particle size of the fine carbide is extremely important to give a desired strength to a hot-rolled steel sheet. One feature of the present invention is that the average particle size of the fine carbide containing Ti and V is designed to be less than 10 nm.

When the fine carbide is precipitated in the matrix, this fine carbide acts as a resistance to movement of dislocations occurring when the steel sheet is deformed. This action strengthens the hot-rolled steel sheet. The effect becomes remarkable with smaller fine carbide. Designing the average particle size of the fine carbide to less than 10 nm makes the above-described action to be further remarkable. Accordingly, the average particle size of the fine carbide containing Ti and V is preferably to be less than 10 nm, more preferably, 5 nm or less.

Volume fraction of fine carbide containing Ti and V with respect to the overall structure: 0.0020 or more

To give a desired strength to the hot-rolled steel sheet, a dispersed precipitation state of the fine carbide containing Ti and V is extremely important. In the present invention, the fine carbide that contains Ti and V with average particle size of less than 10 nm is dispersedly precipitated such that the structure fraction of fine carbide with respect to the overall structure becomes 0.0020 or more in volume fraction. If the volume fraction is less than 0.0020, even if the average particle size of the fine carbide containing Ti and V is less than 10 nm, it is difficult to reliably ensure the desired hot-rolled steel sheet strength. Accordingly, it is preferred that the volume fraction be 0.0020 or more, more preferably, 0.0030 or more.

In the present invention, although precipitation in rows, which is a main precipitation state, is mixed with random precipitation of the fine carbide as a precipitation state of the fine carbide containing Ti and V, this does not have any influence on the characteristics. Various precipitation states are collectively referred to as dispersed precipitation regardless of the state of precipitation.

Next, reasons for limiting the chemical composition of the hot-rolled steel sheet of the present invention will be described. Hereinafter, "%" used for the chemical composition indicates "mass%", unless otherwise stated.

C: 0.03% or more to less than 0.07%

C is a necessary element to form the fine carbide and strengthen the steel. If the C content is less than 0.03%, fine carbide with desired structure fraction cannot be obtained, and a tensile strength of 780 MPa or more cannot be obtained. On the other hand, if the C content is 0.07% or more, the strength is increased too much, the formability (stretch-flange formability) is deteriorated. Accordingly, the C content is preferably to be 0.03% or more to less than 0.07%, more preferably, 0.04% or more to 0.05% or less.

Si: 0.3% or less

Si is a solid-solution strengthening element, and is an element effective for high strengthening of the steel. However, if the Si content exceeds 0.3%, the C precipitation from the ferrite phase is promoted and coarse Fe carbide is likely to precipitate at the grain boundary. This reduces the stretch-flange formability. Additionally, the excessive Si content adversely affects plating performance of the steel sheet. Accordingly, the Si content is preferably to be 0.3% or less.

Mn: 1.0% or more to 1.8% or less

Mn is a solid solution strengthening element, and is an element effective for high strengthening of the steel. Mn is also an element that lowers an $Ar_3$ transformation temperature of a steel. If the Mn content is less than 0.5%, the $Ar_3$ transformation temperature becomes high. Accordingly, the carbide containing Ti is not sufficiently fine-grained, and also an amount of solid solution strengthening is not enough, thus failing to obtain a tensile strength of 780 MPa or more. If the Mn content exceeds 2.0%, segregation becomes remarkable and a phase other than the ferrite phase, that is, a hard phase is formed. This reduces the stretch-flange formability. Accordingly, the Mn content is 1.0% or more to 1.8% or less.

P: 0.025% or less

P is a solid solution strengthening element, and an element effective for high strengthening of the steel. However, if the P content exceeds 0.025%, segregation becomes remarkable. This reduces the stretch-flange formability. Accordingly, the P content is preferably to be 0.025% or less, more preferably, 0.02% or less.

S: 0.005% or less

S is an element that reduces the hot workability (hot rolling property) and increases the hot crack sensitivity of the slab. Additionally, S is present as MnS in the steel, thus deteriorating the formability (the stretch-flange formability) of the hot-rolled steel sheet. S forms TiS in the steel and reduces Ti precipitated as fine carbide. Accordingly, in the present invention, S is preferred to be reduced as much as possible. The S content is preferably to be 0.005% or less.

N: 0.0060% or less

N is a harmful element in the present invention, and is preferred to be reduced as much as possible. In particular, if the N content exceeds 0.0060%, coarse nitride is generated in the steel. This reduces the stretch-flange formability. Accordingly, the N content is preferably to be 0.0060% or less.

Al: 0.001% or more to 0.1% or less

Al is an element acting as a deoxidizer. To obtain this effect, the Al content is 0.001% or more. However, if the Al content exceeds 0.1%, the stretch-flange formability is reduced. Therefore, the Al content is Al: 0.1% or less.

Ti: 0.07% or more to 0.11% or less

Ti is one of important elements in the present invention. Ti is an element that contributes to high strengthening of the steel sheet while obtaining excellent elongation and stretch-flange formability by forming compound carbide with V. If the Ti content is less than 0.07%, a desired strength of the hot-rolled steel sheet cannot be obtained. On the other hand, if the Ti content exceeds 0.11%, coarse carbide containing Ti is likely to be precipitated, making the strength of steel sheet unstable. Accordingly, the Ti content is preferably to be 0.07% or more to 0.11% or less.

V: 0.08% or more to less than 0.15%

V is one of important elements in the present invention. As described above, V is an element that contributes to high strengthening of the steel sheet while obtaining excellent elongation and stretch-flange formability by forming compound carbide with Ti. V is an extremely important element that stably achieves excellent strength of the steel sheet of the present invention by forming compound carbide with Ti and contributes to material uniformity of the steel sheet. If the V content is less than 0.08%, the strength of steel sheet cannot be sufficiently obtained. On the other hand, if the V content is 0.15% or more, the strength becomes excessively high, resulting in deterioration of formability (stretch-flange formability). Accordingly, the V content is preferably to be 0.08% or more to less than 0.15%.

The hot-rolled steel sheet of the present invention contains Ti and V such that the formula (1) is satisfied within the above-described range.

$$0.18 \leq Ti + V \leq 0.24\ldots (1)$$

(where Ti and V are respective contents of the elements (by mass%))

The above-described formula (1) is a condition to be satisfied for providing the steel sheet with stable strength and formability (stretch-flange formability). If a total content of Ti and V becomes less than 0.18%, designing a volume fraction of the fine carbide containing Ti and V with respect to the overall structure to 0.0020 or more is difficult. On the other hand, if the total content of Ti and V exceeds 0.24%, a steel sheet strength becomes excessively high, resulting in deterioration of formability (stretch-flange formability). Accordingly, in the present invention, it is preferred that the total content of Ti and V be 0.18% or more to 0.24% or less. Thus, the fine carbide containing Ti and V is generated at a desired volume fraction, stabilizing steel sheet strength and also stabilizing formability (stretch-flange formability).

The compositions described above are basic compositions in the present invention. In addition to the above-described basic compositions, at least one selected from the group consisting of Nb and Mo can be contained by 1% or less in total. Nb and Mo form compound carbide by composite precipitation together with Ti and V and contribute to obtaining a desired strength. Therefore, Nb and Mo can be contained as necessary. To obtain such effect, it is preferred that Nb and Mo be contained 0.005% or more in total. However, since excessively containing Nb and Mo tends to deteriorate elongation, it is preferred that the total amount of any one or two of Nb and Mo be 1% or less.

In addition to the above-described basic compositions, at least one selected from the group consisting of Cu, Sn, Ni, Ca, Mg, Co, As, Cr, W, B, Pb, Ta, and Sb may be contained by 1% or less in total, more preferably, 0.5% or less. As constituents other than ones described above, Fe and the unavoidable impurities are contained.

In the present invention, a plating layer may be formed at a surface of a hot-rolled steel sheet with the above-described structure and composition. The type of plating layer is not specifically limited. Any conventionally known layer such as an electroplated layer, a hot-dip galvanized layer, and a hot-dip galvannealed layer is applicable.

Next, a description will be given of a method for producing the hot-rolled steel sheet of the present invention.

Hot rolling that includes rough rolling and finish rolling is performed on the steel material (semi-manufactured steel material). After the finish rolling is terminated, cooling and coiling are performed to obtain a hot-rolled steel sheet. At this time, the finish rolling temperature of the finish rolling is designed to be 880°C or more, the average cooling rate of the cooling from the termination of the finish rolling to the coiling is designed to be 10°C/sec. or more, and the coiling temperature is designed to be 550°C or more to less than 700°C. A plating process may be performed on the hot-rolled steel sheet thus obtained.

In the present invention, the method for smelting the semi-manufactured steel material is not specifically limited and can employ a known smelting method using a converter, an electric furnace, or similar furnace. After the smelting, in consideration of segregation and similar problem, a slab (semi-manufactured steel material) is preferred to be obtained by a continuous casting method. The slab may be obtained by a known casting method such as an ingot-slab making method and a thin slab continuous casting method. To hot-roll the slab after the casting, the slab may be rolled after being reheated in a heating furnace. In the case where the temperature is held at a predetermined temperature or more, the slab may be directly rolled without heating the slab.

Rough rolling and finish rolling are performed on the semi-manufactured steel material obtained as described above. However, in the present invention, it is preferred that carbide be dissolved in the semi-manufactured steel material before rough rolling. In the present invention where Ti and V, which are carbide-forming elements, are contained, a heating temperature of the semi-manufactured steel material is preferred to be 1150 °C or more to 1280°C or less. As described above, in the case where the semi-manufactured steel material before rough rolling is held at a temperature of a predetermined temperature or more and the carbide in the semi-manufactured steel material is dissolved, the process for heating the semi-manufactured steel material before rough rolling can be omitted. Here, it is not necessary to specifically limit the rough rolling conditions.

Finish rolling temperature: 880°C or more

Optimization of the finish rolling temperature is important to improve stretch-flange formability of the hot-rolled steel sheet. A finish rolling temperature of less than 880°C results in large grains of crystal grains in the surface layer of the hot-rolled steel sheet and deterioration in formability of the steel sheet (stretch-flange formability). Accordingly, the finish rolling temperature is preferably to be 880°C or more, more preferably, 900°C or more. An excessively high finish rolling temperature tends to generate a flaw due to secondary scale at the surface of the steel sheet. Thus, the finish rolling temperature is preferred to be 1000°C or less.

Average cooling rate: 10°C/sec. or more

After the finish rolling is terminated, an average cooling rate from a finish rolling temperature to the coiling temperature of less than 10°C/sec. results in a high $Ar_3$ transformation temperature, thus the carbide containing Ti cannot be sufficiently fine-grained. Accordingly, the above-described average cooling rate is preferably to be 10°C/sec. or more, more preferably, 30°C/sec. or more.

Coiling temperature: 550°C or more to less than 700°C

Optimization of the coiling temperature is extremely important to achieve, as a structure of the hot-rolled steel sheet, a desired structure over entire region in the width direction of the steel sheet, that is, a matrix in which the area ratio of a ferrite phase is 95% or more with respect to the overall structure and a structure in which fine carbide, which contains Ti and V and has an average particle size of less than 10 nm, is dispersedly precipitated and coarse carbide is reduced.

If the coiling temperature is less than 550°C, the precipitation of the fine carbide containing Ti and V becomes insufficient, failing to obtain the desired steel sheet strength. On the other hand, if the coiling temperature becomes 700°C or more, the average particle size of the fine carbide containing Ti and V is increased. In this case as well, the desired steel sheet strength cannot be obtained. Accordingly, the coiling temperature is preferably to be 550°C or more to less than 700°C, more preferably, 600°C or more to 650°C or less.

In the present invention, a plating process may be performed on the hot-rolled steel sheet obtained as described above, so as to form a plating layer on a surface of the hot-rolled steel sheet. The type of plating process is not specifically limited. A plating process such as a hot-dip galvannealing process and hot-dip galvannealing process can be performed in accordance with conventionally known methods.

As described above, in order to produce a high strength hot rolled steel sheet that has a tensile strength of 780 MPa or more, excellent formability (stretch-flange formability) suitable for raw material for automobile components or a similar component with a complicated cross-sectional shape, and uniform and stable material, it is important to dispersedly precipitate the fine carbide containing Ti and V with the average particle size of less than 10 nm over the entire region in the width direction of the steel sheet. In the present invention, the content of each Ti and V in the steel, which becomes a raw material for the hot-rolled steel sheet, is specified, and the total content of these elements (Ti + V) is specified to 0.18% or more to 0.24% or less. This reduces precipitation of coarse carbide and controls the composition of the fine carbide such that the fine carbide with average particle size of less than 10 nm is dispersedly precipitated sufficiently. Accordingly, according to the present invention, in producing a hot-rolled steel sheet, even at an end of the steel sheet in the width direction, where the material is likely to be unstable in a cooling process after completion of finish rolling, the fine carbide with average particle size of less than 10 nm can be dispersedly precipitated sufficiently. That is, the present invention allows dispersed precipitation of the fine carbide with the average particle size of less than 10 nm over the entire region in the width direction of the hot-rolled steel sheet. This provides uniform and excellent characteristics (tensile strength and stretch-flange formability) over the entire region in the width direction of the hot-rolled steel sheet.

[EXAMPLES]

Molten steels with compositions shown in Table 1 were smelted and subjected to continuous casting to have slabs (semi-manufactured steel materials) with a thickness of 250 mm by an ordinarily known method. These slabs were heated to 1250°C and then subjected to rough rolling and finish rolling. After the finish rolling was terminated, cooling and coiling were performed so as to obtain hot-rolled steel sheets with a sheet thickness of 2.3 mm and a sheet width of 1400 mm. The finish rolling temperature at the finish rolling, the average cooling rate at the cooling (the average cooling rate from the finish rolling temperature to the coiling temperature), and the coiling temperature are as shown in Table 2.

Subsequently, some of the hot-rolled sheets obtained as described above (hot-rolling Nos. in Table 2: 3, 9, and 11) were pickled to remove the surface scale. Then, an annealing process was performed (annealing temperature: 680°C, holding time at the annealing temperature: 120 sec.). Next, the annealed hot-rolled sheet was dipped in a hot-dip galvanizing bath (plating composition: 0.1% Al-Zn, plating bath temperature: 480°C). Hot-dip galvanized films with an adhesion amount of 45 g/m$^2$ (an adhesion amount of one surface) were formed on both surfaces of the hot-rolled steel sheet. Thus, the hot-dip galvanized steel sheet was formed. Regarding one of the obtained hot-dip galvanized steel sheets (hot-rolling No. in Table 2: 9), an alloying process was performed (an alloying temperature: 520°C) to form a hot-dip galvannealed steel sheet.

Table 1

| Steel | Chemical component (mass%) | | | | | | | | | | | | Remarks |
|---|---|---|---|---|---|---|---|---|---|---|---|---|---|
| | C | Si | Mn | P | S | N | Al | Ti | V | Nb, Mo | Others | Ti + V | |
| a | 0.045 | 0.01 | 1.46 | 0.011 | 0.0008 | 0.0032 | 0.042 | 0.101 | 0.110 | - | - | 0.211 | Example of present invention |
| b | 0.041 | 0.02 | 1.26 | 0.011 | 0.0009 | 0.0035 | 0.045 | 0.098 | 0.108 | - | Cu:0.02 | 0.206 | Example of present invention |
| c | 0.049 | 0.01 | 1.28 | 0.012 | 0.0011 | 0.0037 | 0.046 | 0.103 | 0.104 | - | - 0.207 | | Example of present invention |
| d | 0.048 | 0.01 | 1.33 | 0.012 | 0.0012 | 0.0031 | 0.048 | 0.099 | 0.105 | - | Ni:0.01,W:0.01 | 0.204 | Example of present invention |
| e | 0.046 | 0.02 | 1.49 | 0.011 | 0.0008 | 0.0039 | 0.043 | 0.085 | 0.121 | - | Sn:0.005 | 0.206 | Example of present invention |
| f | 0.049 | 0.02 | 1.52 | 0.011 | 0.0007 | 0.0035 | 0.042 | 0.097 | 0.118 | - | - | 0.215 | Example of present invention |
| g | 0.037 | 0.03 | 1.56 | 0.012 | 0.0013 | 0.0041 | 0.038 | 0.104 | 0.112 | - | Pb:0.01,As:0.01 | 0.216 | Example of present invention |
| h | 0.047 | 0.03 | 1.27 | 0.012 | 0.0021 | 0.0033 | 0.055 | 0.106 | 0.117 | Mo:0.009 | - | 0.223 | Example of present invention |
| | | | | | | | | | | | | | |
| j | 0.036 | 0.01 | 1.30 | 0.011 | 0.0012 | 0.0032 | 0.042 | 0.081 | 0.111 | - | Ca:0.01 | 0.192 | Example of present invention |
| k | 0.039 | 0.01 | 1.29 | 0.010 | 0.0013 | 0.0034 | 0.043 | 0.092 | 0.097 | Nb:0.005 | Cr:0.015 | 0.189 | Example of present invention |
| l | 0.051 | 0.02 | 1.41 | 0.012 | 0.0009 | 0.0041 | 0.038 | 0.094 | 0.093 | - | B:0.0007 | 0.187 | Example of present invention |
| m | 0.056 | 0.01 | 1.35 | 0.011 | 0.0008 | 0.0042 | 0.039 | 0.091 | 0.142 | - | Mg:0.01 | 0.233 | Example of present invention |
| n | 0.061 | 0.02 | 1.29 | 0.011 | 0.0015 | 0.0028 | 0.041 | 0.087 | 0.121 | Nb:0.007 | - | 0.208 | Example of present invention |
| o | 0.049 | 0.03 | 1.43 | 0.010 | 0.0009 | 0.0036 | 0.046 | 0.084 | 0.114 | - | Sb:0.01 | 0.198 | Example of present invention |
| p | 0.016 | 0.01 | 1.42 | 0.011 | 0.0007 | 0.0034 | 0.034 | 0.109 | 0.112 | - | - | 0.221 | Comparative example |
| q | 0.045 | 0.01 | 1.52 | 0.012 | 0.0009 | 0.0035 | 0.042 | 0.042 | 0.072 | - | - | 0.114 | Comparative example |
| r | 0.121 | 0.01 | 1.34 | 0.012 | 0.0009 | 0.0035 | 0.030 | 0.163 | 0.224 | - | - | 0.387 | Comparative example |
| s | 0.040 | 0.01 | 0.34 | 0.010 | 0.0015 | 0.0040 | 0.030 | 0.105 | 0.120 | - | - | 0.225 | Comparative example |

Table 2

| Steel | Hot-rolling No. | Producing conditions of hot-rolled steel sheet | | | Remarks |
|---|---|---|---|---|---|
| | | Finish rolling temperature (°C) | Average cooling rate (°C/sec.)*1 | Coiling temperature (°C) | |
| a | 1 | 912 | 25 | 610 | Example of present invention |
| | 2 | 879 | 30 | 620 | Comparative example |
| b | 3 | 903 | 20 | 624 | Example of present invention (plated sheet*2) |
| | 4 | 911 | 5 | 630 | Comparative example |
| c | 5 | 912 | 20 | 628 | Example of present invention |
| | 6 | 923 | 25 | 780 | Comparative example |
| d | 7 | 925 | 25 | 650 | Example of present invention |
| | 8 | 918 | 30 | 480 | Comparative example |
| e | 9 | 924 | 40 | 645 | Example of present invention (plated sheet*3) |
| f | 10 | 921 | 30 | 630 | Example of present invention |
| g | 11 | 897 | 30 | 628 | Example of present invention (plated sheet*4) |
| h | 12 | 912 | 35 | 609 | Example of present invention |
| i | 14 | 930 | 35 | 675 | Example of present invention |
| k | 15 | 912 | 20 | 646 | Example of present invention |
| l | 16 | 916 | 25 | 632 | Example of present invention |
| m | 17 | 914 | 25 | 623 | Example of present invention |
| n | 18 | 915 | 25 | 615 | Example of present invention |
| o | 19 | 921 | 30 | 631 | Example of present invention |
| p | 20 | 922 | 30 | 628 | Comparative example |
| q | 21 | 907 | 25 | 625 | Comparative example |
| r | 22 | 906 | 30 | 620 | Comparative example |
| s | 23 | 911 | 40 | 630 | Comparative example |

*1) Average cooling rate from finish rolling temperature to coiling temperature (°C/sec.)
*2) Hot-dip galvanized steel sheet
*3) Hot-dip galvannealed steel sheet
*4) Hot-dip galvanized steel sheet

Specimens were extracted from the hot-rolled steel sheets (the hot-rolled steel sheets, hot-dip galvanized steel sheets, or the hot-dip galvannealed steel sheets) obtained as described above. Subsequently, a structure observation, a precipitation observation, a tensile test, and a hole expanding test were carried out so as to obtain an area ratio of ferrite phase, an average particle size and a volume fraction of the fine carbide containing Ti and V, a tensile strength and a hole expansion ratio (stretch-flange formability). The testing methods were as follows.

(i) Structure observation

A specimen was extracted from the obtained hot-rolled steel sheets. The cross section of the specimen in the rolling direction was mechanically polished and etched with nital. Subsequently, a structure photograph (a SEM photograph) taken with a scanning electron microscope (SEM) at a magnification of 3000 times was used to determine the ferrite phase, the type of structure other than the ferrite phase, and the area ratios of these structures by an image analysis device.

(ii) Precipitation observation

The thin film produced from the obtained hot-rolled steel sheet (at the position of center of sheet thickness) was observed through a transmission type electron microscope (TEM) at a magnification of 260000 times, so as to obtain an average particle size and a volume fraction of the fine carbide containing Ti and V.

Regarding the particle size of the fine carbide containing Ti and V, individual particle areas were obtained by image processing based on the observation result of 30 visual fields at a magnification of 260000 times, and the particle sizes were obtained using circular approximation. Subsequently, the arithmetic mean of the particle sizes of each obtained particle was obtained as the average particle size.

Regarding the volume fraction of the fine carbide containing Ti and V, 10% acetylacetone-1% tetramethylammonium chloride-methanol solution (AA solution) was used to electrolyze a base iron. Subsequently, an extracted residue analysis was performed on filtrated residue so as to obtain the weight of the carbide containing Ti and V. The obtained weight was divided by a density of the carbide containing Ti and V so as to obtain the volume. This volume was divided by the volume of the dissolved base iron so as to obtain the volume fraction.

Regarding the density of the carbide containing Ti and V, density of TiC ($4.25$ g/cm$^3$) was corrected assuming that a part of Ti atom in TiC crystal was replaced by V atom. The density was thus obtained. That is, Ti and V in carbide containing Ti and V were measured by extracted residue analysis and a proportion of V replacing Ti was obtained. Thus, correction was performed considering atomic weights of Ti and V.

(iii) Tensile test

From the center position and the one-quarter width position in the sheet width of the obtained hot-rolled steel sheets, JIS No. 5 tensile test specimens (JIS Z 2201) were extracted such that the tensile direction was perpendicular to the rolling direction. Subsequently, a tensile test was performed in compliance with the specification of JIS Z 2241 so as to measure a tensile strength (TS).

(iv) Hole expanding test

From the center position and the one-quarter width position in the sheet width of the obtained hot-rolled steel sheets, a specimen (in the size of 130 mm $\times$ 130 mm) was extracted. In the specimen, a hole with an initial diameter $d_0$ of 10 mm $\varphi$ was formed by punching processing with a punch. The hole expanding test was carried out using these specimens. A conical punch at a vertex angle of 60° was inserted into the hole so as to expand the hole. When a crack passed through the steel sheet (the specimen), a diameter "d" of the hole was measured to calculate a hole expansion ratio $\lambda$ (%) with the following formula.

$$\text{Hole expansion ratio } \lambda \ (\%) = \{(d - d_0)/d_0\} \times 100$$

The obtained result was shown in Table 3.

Table 3

| Steel | Hot-rolling No. | Structure of hot-rolled steel sheet | | | | Mechanical characteristics of hot-rolled steel sheet | | | | Remarks |
|---|---|---|---|---|---|---|---|---|---|---|
| | | Type*5 | Area ratio of ferrite phase (%)*6 | Fine carbide containing Ti and V | | Tensile strength TS (MPa) | | Hole expansion ratio $\lambda$ (%) | | |
| | | | | Average particle size (nm) | Volume fraction | Width center portion | One-quarter width position | Width center portion | One-quarter width position | |
| a | 1 2 | F | 100 | 5 | 0.0027 | 812 | 810 | 86 | 87 | Example of present invention |
| | | F | 100 | 8 | 0.0027 | 793 | 790 | 55 | 58 | Comparative example |
| b | 3 | F | 100 | 4 | 0.0025 | 796 | 795 | 85 | 87 | Example of present invention (plated sheet*2) |
| | 4 | F | 100 | 19 | 0.0025 | 724 | 708 | 89 | 91 | Comparative example |
| c | 5 | F | 100 | | 0.0029 | 806 | 799 | 87 | 89 | Example of present invention |
| | 6 | F | 100 | 23 | 0.0029 | 698 | 675 | 82 | 99 | Comparative example |
| d | 7 | F | 100 | 5 | 0.0029 | 806 | 800 | 78 | | Example of present invention |
| | 8 | F+B | 96 | 5 | 0.0008 | 687 | 678 | 97 | 99 | Comparative example |
| e | 9 | F | 100 | 6 | 0.0028 | 812 | 801 | 92 | 97 | Example of present invention (plated sheet*3) |
| f | 10 | F+P | 97 | 5 | 0.0029 | 805 | 804 | 79 | 81 | Example of present invention |
| g | 11 | F | 100 | 5 | 0.0022 | 798 | 792 | 75 | 78 | Example of present invention (plated sheet*4) |
| h | 12 | F | 100 | 4 | 0.0028 | 811 | 799 | 86 | 88 | Example of present invention |

EP 2 765 211 B1

| Steel | Hot-rolling No. | Structure of hot-rolled steel sheet | | | | | Mechanical characteristics of hot-rolled steel sheet | | | | Remarks |
|---|---|---|---|---|---|---|---|---|---|---|---|
| | | Type*5 | Area ratio of ferrite phase (%)*6 | Fine carbide containing Ti and V | | | Tensile strength TS (MPa) | | Hole expansion ratio λ (%) | | |
| | | | | Average particle size (nm) | Volume fraction | | Width center portion | One-quarter width position | Width center portion | One-quarter width position | |
| j | 14 | F | 100 | 6 | 0.0022 | | 798 | 789 | 89 | 91 | Example of present invention |
| k | 15 | F | 100 | 7 | 0.0023 | | 800 | 799 | 84 | 92 | Example of present invention |
| l | 16 | F | 100 | 5 | 0.0031 | | 812 | 807 | 86 | 88 | Example of present invention |
| m | 17 | F | 100 | 5 | 0.0034 | | 823 | 817 | 85 | 91 | Example of present invention |
| n | 18 | F | 100 | 5 | 0.0037 | | 827 | 822 | 82 | 87 | Example of present invention |
| o | 19 | F | 100 | 4 | 0.0029 | | 803 | 790 | 89 | 95 | Example of present invention |
| p | 20 | F | 100 | 3 | 0.0007 | | 645 | 638 | 107 | 112 | Comparative example |
| q | 21 | F | 100 | 3 | 0.0017 | | 675 | 666 | 99 | 102 | Comparative example |
| r | 22 | F+P | 93 | 4 | 0.0073 | | 912 | 896 | 54 | 55 | Comparative example |
| s | | F | 100 | 18 | 0.0024 | | 735 | 718 | 85 | 87 | Comparative example |

*2) Hot-dip galvanized steel sheet
*3) Hot-dip galvannealed steel sheet
*4) Hot-dip galvanized steel sheet
*5) F denotes ferrite, P denotes pearlite, and B denotes bainite.
*6) Area ratio of ferrite phase with respect to overall structure (%)

EP 2 765 211 B1

14

All the examples of the present invention are hot-rolled steel sheets that have both a high strength at a tensile strength of 780 MPa or more and an excellent formability of a hole expansion ratio of λ: 60% or more, thus exhibiting excellent mechanical characteristics. Moreover, all the examples of the present invention are hot-rolled steel sheets that meets: a difference in strength between the center of the sheet width (a center portion) and a one-quarter width position of steel sheet is 15 MPa or less, a difference in hole expansion ratio between the center of the sheet width (the center portion) and the one-quarter width position of steel sheet is 15% or less. Thus, stability of the mechanical characteristics and material uniformity are demonstrated.

On the other hand, the hot-rolled steel sheets of the comparative examples outside the scope of the present invention cannot achieve a desired tensile strength or a hole expansion ratio, or a difference in material in the steel sheet width direction is large.

**Claims**

1. A high strength hot-rolled steel sheet, having
   a chemical composition consisting of:

   C: 0.03% or more to less than 0.07%;
   Si: 0.3% or less;
   Mn: 1.0% or more to 1.8% or less;
   P: 0.025% or less;
   S: 0.005% or less;
   N: 0.0060% or less;
   Al: 0.001% or more to 0.1% or less;
   Ti: 0.07% or more to 0.11% or less;
   V: 0.08% or more to less than 0.15% on a mass percent basis, such that Ti and V contents satisfy the following formula (1),

   optionally
   at least one selected from the group consisting of Nb and Mo by 1% or less in total, and
   optionally at least one selected from the group consisting of Cu, Sn, Ni, Ca, Mg, Co, As, Cr, W, B, Pb, Ta, and Sb by 1% or less in total on a mass percent basis,
   wherein balance is Fe and inevitable impurities,
   a matrix that has a ferrite phase with an area ratio of 95% or more with respect to an overall structure; and
   a structure where fine carbide is dispersedly precipitated in the matrix, the fine carbide containing Ti and V has an average particle size of less than 10 nm, and a volume fraction of the fine carbide is 0.0020 or more with respect to the overall structure,
   wherein
   the high strength hot-rolled steel sheet has a tensile strength of 780 MPa or more and a hole expansion ratio of 60% or more,
   a difference in a tensile strength between a center position of a sheet width and a position at one-quarter width of the steel sheet is 15 MPa or less, and a difference in a hole expansion ratio among the positions is 15% or less:

   $$0.18 \leq Ti + V \leq 0.24 \ldots (1)$$

   where Ti and V are respective contents of the elements by mass %.

2. The high strength hot-rolled steel sheet according to claim 1, wherein
   the chemical composition contains at least one selected from the group consisting of Nb and Mo by 1% or less in total on a mass percent basis.

3. The high strength hot-rolled steel sheet according to claim 1 or 2, wherein
   the chemical composition contains at least one selected from the group consisting of Cu, Sn, Ni, Ca, Mg, Co, As, Cr, W, B, Pb, Ta, and Sb by 1% or less in total on a mass percent basis.

4. The high strength hot-rolled steel sheet according to any one of claims 1 to 3, further comprising
   a plating layer formed at a surface of the high strength hot-rolled steel sheet.

5. A method for producing a high strength hot-rolled steel sheet of any one of claims 1 to 3, comprising:

preparing the steel material with the chemical composition according to any one of claims 1 to 3;
hot-rolling the steel material including rough rolling and finish rolling at a rolling temperature of 880°C or more to form a hot-rolled steel sheet;
cooling the hot-rolled steel sheet at an average cooling rate of 10°C/sec. or more subsequent to completion of the finish rolling; and
coiling the hot-rolled steel sheet at 600°C or more to less than 700°C,
wherein the high strength hot-rolled steel sheet has a tensile strength of 780 MPa or more.

6. The method according to claim 5, further comprising
plating a surface of the hot-rolled steel sheet subsequent to the coiling.

**Patentansprüche**

1. Hochfestes warmgewalztes Stahlblech, aufweisend eine chemische Zusammensetzung, bestehend aus:

C: 0,03% oder mehr bis weniger als 0,07%;
Si: 0,3% oder weniger;
Mn: 1,0% oder mehr bis 1,8% oder weniger;
P: 0,025% oder weniger;
S: 0,005% oder weniger;
N: 0,0060% oder weniger;
Al: 0,001% oder mehr bis 0,1% oder weniger;
Ti: 0,07% oder mehr bis 0,11% oder weniger;
V: 0,08% oder mehr bis weniger als 0,15%, auf Basis von Massenprozent, so dass die Gehalte von Ti und V die nachstehende Formel (1) erfüllen,

gegebenenfalls
mindestens einem, ausgewählt aus der Gruppe, bestehend aus Nb und Mo, zu insgesamt 1% oder weniger, und gegebenenfalls mindestens einem, ausgewählt aus der Gruppe, bestehend aus Cu, Sn, Ni, Ca, Mg, Co, As, Cr, W, B, Pb, Ta, und Sb, zu insgesamt 1% oder weniger, auf Basis von Massenprozent,
worin der Rest Fe und unvermeidbare Verunreinigungen sind,
eine Matrix, die eine Ferritphase mit einem Flächenanteil von 95% oder mehr in Bezug auf die Gesamtstruktur aufweist; und
eine Struktur, bei der Feincarbid dispergiert in der Matrix ausgeschieden ist, wobei das Feincarbid, das Ti und V enthält, eine durchschnittliche Teilchengröße von weniger als 10 nm aufweist und ein Volumenanteil des Feincarbids 0,0020 oder mehr in Beug auf die Gesamtstruktur beträgt,
worin
das hochfeste warmgewalzte Stahlblech eine Zugfestigkeit von 780 MPa oder mehr und ein Lochaufweitungsverhältnis von 60% oder mehr aufweist, der Unterschied in der Zugfestigkeit zwischen einer Mittelposition der Blechbreite und einer Position bei einer Viertelbreite des Stahlblechs 15 MPa oder weniger beträgt und der Unterschied im Lochaufweitungsverhältnis zwischen diesen Position 15% oder weniger beträgt:

$$0,18 \leq Ti + V \leq 0,24 \ldots (1)$$

wobei Ti und V für die jeweiligen Gehalte der Elemente in Massen-% stehen.

2. Hochfestes warmgewalztes Stahlblech gemäß Anspruch 1, worin
die chemische Zusammensetzung mindestens eines enthält, ausgewählt aus der Gruppe, bestehend aus Nb und Mo, zu insgesamt 1% oder weniger, auf Basis von Massenprozent.

3. Hochfestes warmgewalztes Stahlblech gemäß Anspruch 1 oder 2, worin
die chemische Zusammensetzung mindestens eines enthält, ausgewählt aus der Gruppe, bestehend aus Cu, Sn, Ni, Ca, Mg, Co, As, Cr, W, B, Pb, Ta und Sb, zu insgesamt 1% oder weniger, auf Basis von Massenprozent.

**4.** Hochfestes warmgewalztes Stahlblech gemäß mindestens einem der Ansprüche 1 bis 3, ferner umfassend eine Plattierungsschicht, die auf einer Oberfläche des hochfesten warmgewalzten Stahlblechs ausgebildet ist.

**5.** Verfahren zur Herstellung eines hochfesten warmgewalzten Stahlblechs gemäß mindestens einem der Ansprüche 1 bis 3, umfassend:

das Herstellen des Stahlmaterials mit der chemischen Zusammensetzung gemäß mindestens einem der Ansprüche 1 bis 3;
das Warmwalzen des Stahlmaterials, einschließlich Vorwalzen und Endwalzen, bei einer Walztemperatur von 880°C oder mehr, so dass ein warmgewalztes Stahlblech gebildet wird;
das Abkühlen des warmgewalzten Stahlblechs bei einer durchschnittlichen Abkühlgeschwindigkeit von 10°C/Sek. oder mehr nach dem Beendigen des Endwalzens; und
das Aufrollen des warmgewalzten Stahlblechs bei 600°C oder mehr bis weniger als 700°C,
worin das hochfeste warmgewalzte Stahlblech eine Zugfestigkeit von 780 MPa oder mehr aufweist.

**6.** Verfahren gemäß Anspruch 5, ferner umfassend
das Plattieren einer Oberfläche des warmgewalzten Stahlblechs nach dem Aufrollen.

**Revendications**

**1.** Feuille d'acier laminée à chaud à forte résistance, ayant une composition chimique consistant en :

C: 0,03 % ou plus à moins de 0,07 % ;
Si : 0,3 % ou moins ;
Mn : 1,0 % ou plus à 1,8 % ou moins;
P : 0,025 % ou moins;
S : 0,005 % ou moins;
N : 0,0060 % ou moins;
Al : 0,001 % ou plus à 0,1 % ou moins ;
Ti : 0,07 % ou plus à 0,11 % ou moins;
V : 0,08 % ou plus à moins de 0,15 % sur une base de pourcentage en masse, de telle sorte que des teneurs en Ti et V satisfont à la formule (1) suivante,

éventuellement
au moins un élément choisi dans le groupe constitué par Nb et Mo de 1 % ou moins au total, et
éventuellement au moins un élément choisi dans le groupe constitué par Cu, Sn, Ni, Ca, Mg, Co, As, Cr, W, B, Pb, Ta et Sb de 1 % ou moins au total sur une base de pourcentage en masse,
dans laquelle le reste est du Fe et des impuretés inévitables,
une matrice qui présente une phase ferrite avec un rapport de surface de 95 % ou plus par rapport à une structure globale ; et
une structure où du carbure fin est précipité de manière dispersée dans la matrice, le carbure fin contenant Ti et V a une taille moyenne de particule inférieure à 10 nm, et une fraction volumique du carbure fin vaut 0,0020 ou plus par rapport à la structure globale,
dans laquelle
la feuille d'acier laminée à chaud à forte résistance présente une résistance à la traction de 780 MPa ou plus et un rapport à l'essai d'expansion d'un trou de 60 % ou plus,
une différence de la résistance à la traction entre une position centrale d'une largeur de feuille et une position à un quart de la largeur de la feuille d'acier est de 15 MPa ou moins, et une différence du rapport à l'essai d'expansion d'un trou entre les positions est de 15 % ou moins :

$$0,18 \leq Ti + V \leq 0,24 \ ... \ (1)$$

où Ti et V sont des teneurs respectives des éléments en % en masse.

**2.** Feuille d'acier laminée à chaud à forte résistance selon la revendication 1, dans laquelle
la composition chimique contient au moins un élément choisi dans le groupe constitué par Nb et Mo de 1 % ou moins au total sur une base de pourcentage en masse.

3. Feuille d'acier laminée à chaud à forte résistance selon la revendication 1 ou 2, dans laquelle
la composition chimique contient au moins un élément choisi dans le groupe constitué par Cu, Sn, Ni, Ca, Mg, Co, As, Cr, W, B, Pb, Ta et Sb de 1 % ou moins au total sur une base de pourcentage en masse.

4. Feuille d'acier laminée à chaud à forte résistance selon l'une quelconque des revendications 1 à 3, comprenant en outre
une couche de placage formée sur une surface de la feuille d'acier laminée à chaud à forte résistance.

5. Procédé de production d'une feuille d'acier laminée à chaud à forte résistance selon l'une quelconque des revendications 1 à 3, comprenant :

la préparation du matériau d'acier avec la composition chimique selon l'une quelconque des revendications 1 à 3 ;
le laminage à chaud du matériau d'acier incluant le laminage brut et le laminage de finition à une température de laminage de 880 °C ou plus pour former une feuille d'acier laminée à chaud ;
le refroidissement de la feuille d'acier laminée à chaud à une vitesse moyenne de refroidissement de 10 °C/s ou plus après l'achèvement du laminage de finition ; et
l'enroulement de la feuille d'acier laminée à chaud à 600 °C ou plus à moins de 700 °C,
dans lequel la feuille d'acier laminée à chaud à forte résistance présente une résistance à la traction de 780 MPa ou plus.

6. Procédé selon la revendication 5, comprenant en outre
le placage d'une surface de la feuille d'acier laminée à chaud après l"enroulement.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006161112 A
- JP 2009052139 A
- EP 2557193 A1
- EP 2177640 A1
- JP 2005120430 A
- WO 2010131303 A1